# FASCICULE DE BREVET EUROPEEN

(11) **EP 3 703 498 B1**
(45) Date de publication et mention de la délivrance du brevet: **06.08.2025**
(21) Numéro de dépôt: 18811058.9
(22) Date de dépôt: 30.10.2018
(51) Int. Cl.: A01N 49/00, A01P 7/00

(54) **PESTICIDE OU RÉPULSIF À BASE DE GÉRANIOL OU CITRONELLAL**
PESTIZID ODER ABSCHRECKMITTEL BASIERT AUF GERANIOL UND CITRONELLAL
PESTICIDE OR REPELLENT BASED UPON GERANIOL AND CITRONELLAL

(30) Priorité: 09.11.2017 FR 1760522; 30.10.2017 FR 1760234
(43) Date de publication de la demande: 09.09.2020
(73) Titulaire: Finaz de Saint Andre, 69970 Chaponnay (FR)
(72) Inventeur: NYS, Benoît, 06410 Biot (FR)
(74) Mandataire: Germain Maureau
(86) Numéro de dépôt international: PCT/FR2018/052688
(87) Numéro de publication internationale: WO 2019/086799

(56) Documents cités:
- EP-A1- 3 143 876
- WO-A1-2014/063109

## Description

L'invention concerne un principe actif pesticide ou répulsif à base d'un composé terpénique insaturé choisi parmi le géraniol et le citronellal ou d'un mélange de géraniol et de citronellal, et plus précisément une combinaison de ce(s) composé(s) avec un tensioactif et un solvant, ainsi que les utilisations de ce principe actif.

Le géraniol est un constituant des huiles de rose, de palmarosa, de géranium, de citron et de citronnelle, d'où il est extrait. Il peut aussi être obtenu par synthèse chimique. Le citronellal est un constituant des huiles essentielles de citronnelle et d'eucalyptus.

Ils sont des insecticides bien connus et efficaces, ainsi que des répulsifs vis-à-vis des insectes. Ils sont largement utilisés dans ces indications, seuls ou associés à un ou d'autres principes actifs, de préférence d'origine naturelle.

Compte tenu de leur large spectre d'action, le géraniol et le citronellal sont présents dans de nombreux insecticides à base de molécules issues de source végétale, et même s'ils restent efficaces en forme diluée, comme en solution aqueuse, on est à la recherche de compositions insecticides performantes contenant des teneurs réduites en ces dites molécules. Ce sont des produits chers, de telles compositions seraient donc plus économiques. De plus, à l'état pur, ils présentent des risques allergisants en cas de contact direct avec la peau. De nouvelles formulations permettant de diminuer les concentrations d'usage sont attendues, et pour le fabricant et pour le consommateur. Par ailleurs, dans certains cas, il y a nécessité d'améliorer sensiblement la vitesse ou la fulgurance de l'action du géraniol, du citronellal ou du mélange de géraniol et de citronellal.

Selon EP3143876A1, on connait un principe actif insecticide combinant le géraniol et/ou le citronellal en tant que substance active et un éther de glycol, permettant d'abaisser les teneurs efficaces en substance active, tout en conduisant à des performances insecticides supérieures à celles de la substance active seule, sur les blattes germaniques, ces dernières étant représentatives des insectes rampants dans les tests d'efficacité.

Le besoin de compositions possédant un éventail plus ample d'efficacité et permettant de limiter les teneurs en substance active se fait toujours ressentir.

Il a été découvert, de manière inattendue, que la combinaison du géraniol et/ou du citronellal en tant que substance active, avec un tensioactif anionique et/ou non ionique et/ou amphotère d'une part, et un solvant choisi parmi certains éthers de glycol et le lactate d'éthyle d'autre part, permet non seulement d'augmenter l'efficacité insecticide de la substance active par rapport à la substance active seule ou en association avec un éther de glycol selon EP3143876A1, mais en outre de l'étendre plus généralement à une efficacité pesticide ou répulsive, en l'absence de toute autre substance active chimique, précisément en l'absence de toute autre substance pesticide, et par exemple de pyréthrinoïdes. Bien que l'invention et l'ensemble de la description s'étendent aux tensioactifs amphotères, une variante de l'invention ne met en œuvre qu'un ou des tensioactifs anioniques, un ou des tensioactifs non ioniques ou des mélanges de tensioactifs anioniques et de tensioactifs non ioniques.

Avant d'aborder plus en détail la description de l'invention, certains termes employés dans le présent texte sont définis.

Par pesticide, dans toute expression du type substance pesticide, principe actif pesticide, composition pesticide, effet pesticide, on entend la propriété consistant à détruire tout organisme considéré comme nuisible dans un environnement donné. Ce terme est générique et rassemble les propriétés insecticides, fongicides, herbicides, parasiticides, bactéricides. Dans le cadre de l'invention, le terme pesticide s'applique notamment au secteur de la santé des plantes ou phytosanitaire, et donc à l'agriculture ainsi qu'à l'horticulture, mais aussi au secteur de la santé des animaux ou zoosanitaire ou vétérinaire pour le traitement d'animaux d'élevage ou domestiques, et encore à tout secteur domestique ou industriel.

Par insecticide, on entend la propriété consistant à tuer les insectes, rampants et volants, leurs larves et leurs œufs. A titre d'exemple, parallèlement aux applications phytosanitaires bien connues, un produit insecticide peut être utilisé dans une application vétérinaire comme antiparasitaire, pour le traitement antipoux des locaux d'animaux d'élevage ou pour des colliers antipuces pour chiens ou chats, ou dans un domaine domestique, comme antimites, antifourmis.

Par répulsif, dans toute expression du type substance répulsive, principe actif répulsif, composition répulsive, effet répulsif, on entend l'effet consistant à repousser des organismes considérés comme nuisibles dans un environnement donné. Dans le cadre de l'invention, le terme répulsif s'applique principalement aux nuisibles que sont les insectes, les pigeons, les chats, les chiens, sans toutefois y être restreints.

Par tensioactif anionique, on comprend classiquement un composé amphiphile comprenant une partie lipophile et une partie hydrophile, cette dernière étant chargée négativement. Il a une balance Hydrophile/Lipophile (HLB) de l'ordre de 8 à 18. Entrent dans cette définition, essentiellement les sulfonates tels que les sulfonates de paraffine, les sulfates tels que les alkyl(C1-C20)-sulfates et les alkyl(C1-C20)-éther-sulfates, en tant que sels le plus couramment, sans y être restreint, d'ammonium quaternaire ou d'un métal quelconque tel que le sodium. Le terme alkyl dans le présent texte fait référence à un groupe hydrocarboné saturé, linéaire ou ramifié.

Par sulfonate d'alcane(s) secondaire(s), aussi désigné par sulfonate de paraffine (SAS en abrégé), on entend un composé répondant à la formule suivante : 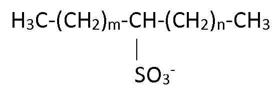 dans laquelle m et n sont des entiers, identiques ou différents, la somme de m et n étant de 2 à 30, avantageusement de 4 à 20, et mieux encore de 10 à 14. Souvent, ils sont à l'état de mélanges, on parle alors de somme moyenne de m et n, cette somme moyenne de m et n allant de 2 à 30, avantageusement de 4 à 20, mieux encore de 10 à 14. Ils sont sous forme de sel tel que sel de sodium ou de tout autre sel compatible.

A titre d'exemples de tensioactifs non ioniques que l'on pourra particulièrement utiliser dans le cadre de l'invention, on trouve les dérivés des poly(éthylène glycol), notamment les alkyls poly(éthylène-glycol) éthers dont le groupement alkyle est une chaîne hydrocarbonée linéaire ou ramifiée, saturée ou non saturée et ayant de 6 à 18 atomes de carbone.

Par tensioactif amphotère, on peut citer à titre d'exemples non limitatifs, les bétaïne, les dérivés imidazoline, les alkyl amide carboxylate, le lauriminodipropionate de sodium.

Dans le cadre de l'invention, les composés de la formule semi-développée CH₃OC₃H₆OC₃H₆OH incluent le dipropylène glycol méthyl éther de formule CH₃O[CH₂CH(CH₃)O]₂H et tout isomère.

Il ressort de ce qui précède et en particulier de l'éventail des secteurs d'utilisation des produits pesticides et des quantités en jeu, qu'il est primordial de développer des principes actifs efficaces, peu concentrés et inoffensifs.

L'invention apporte une solution avec un principe actif pesticide ou répulsif consistant en une combinaison d'un composé terpénique insaturé choisi parmi le géraniol, le citronellal et un mélange de géraniol et de citronellal, d'au moins un tensioactif anionique et/ou un tensioactif non ionique et d'au moins un solvant choisi parmi un composé de la formule (I) semi-développée CH₃OC₃H₆OC₃H₆OH, le lactate d'éthyle et un mélange d'undit composé (I) et du lactate d'éthyle. Dans la définition ci-dessus, l'expression « d'au moins un » signifie « un ou plusieurs ». Compte tenu des constituants engagés dans ce principe actif et des faibles teneurs nécessaires pour obtenir une efficacité pesticide ou répulsive, ce principe actif répond parfaitement au besoin actuel. Il a en outre été observé, de manière inattendue, qu'une combinaison des constituants selon l'invention ci-dessus permettait d'atteindre des performances insecticides que des combinaisons de l'art antérieur à base de géraniol ou de citronellal ne pouvaient atteindre même en augmentant la teneur en géraniol ou citronellal, un plafonnement des valeurs insecticides étant constaté.

Avantageusement, le tensioactif est anionique. Comme cela sera illustré dans les exemples, le tensioactif anionique peut être choisi parmi un sulfonate d'alcane(s) secondaire(s) et un lauryl sulfate, et leurs mélanges. Le lauryl sulfate est par exemple choisi parmi le lauryl sulfate de sodium, le lauryl sulfate d'ammonium, de magnésium.

Selon un mode préférentiel de mise en œuvre de l'invention, le solvant est le dipropylène glycol méthyl éther de formule CH₃O[CH₂CH(CH₃)O]₂H.

Dans un principe actif pesticide ou répulsif de l'invention, la teneur en composé(s) terpénique(s) est de préférence de 0,5-30% en masse par rapport à la masse du principe actif, celle en tensioactif(s) anionique(s) et/ou non ioniques(s) de 5-60% en masse par rapport à la masse du principe actif, le complément étant apporté par le ou les solvants précités, soit une teneur de 10-94,5% en masse par rapport à la masse du principe actif. A l'intérieur des gammes de valeurs ci-dessus, les teneurs en en composé(s) terpénique(s) et en tensioactif(s) anionique(s) et/ou non ionique(s) sont essentiellement sélectionnées en vue d'obtenir un principe actif manipulable, c'est-à-dire ayant une présentation suffisamment homogène et une viscosité qui permet de le soutirer aisément par exemple pour obtenir des formulations diluées.

L'invention concerne aussi une composition pesticide ou répulsive qui comprend un principe actif de l'invention, un diluant et/ou des additifs. Le principe actif peut y être présent dans une teneur allant de 0,5 à 90% en masse par rapport à la masse de la composition. Cette composition peut se présenter sous la forme d'un concentré contenant au moins un principe actif de l'invention, un diluant, voire des additifs. Dans ce format de l'invention, elle comprend avantageusement 20-90% en masse dudit principe actif. Elle est alors destinée à être diluée dans de l'eau, un alcool comme l'éthanol ou l'isopropanol, ou un mélange hydroalcoolique, l'eau étant toutefois préférée. Une dilution avantageuse en ce qu'elle conduit à une composition pesticide ou répulsive efficace et peu ou non nocive, comprend de 0,5-15% en masse de principe actif par rapport à la masse de la composition diluée, et mieux encore de 0,5-5%.

Comme indiqué ci-dessus, une composition de l'invention peut comprendre des additifs, ceux-ci sont choisis pour être compatibles avec les constituants du principe actif d'une part, et les utilisations auxquelles la composition est destinée d'autre part. Ils sont classiques et bien connus de l'homme du métier. A titre d'exemples, il peut s'agir d'additifs inertes permettant de véhiculer le principe actif pesticide ou répulsif, d'additifs permettant de potentialiser l'action synergique des constituants du principe actif, d'additifs permettant d'améliorer l'aspect de la composition, de la parfumer, ou de renforcer son intérêt par une action complémentaire.

Parmi ces additifs, certains sont préférés ; ils peuvent être employés seuls ou en combinaison ; ils sont les suivants :
- des huiles essentielles différentes du géraniol et du citronellal, telles qu'une huile essentielle de menthe poivrée ;
- un ou des sucres, en particulier des monosaccharides tels que le glucose et le fructose ;
- des sels, en particulier des chlorures et des sulfates de sodium, de magnésium, de calcium, de potassium ; ceux-ci peuvent être apportés, au moins en partie, par l'eau de mer qui est le diluant et ils sont présents sous forme d'ions chlorure, sulfate, sodium, magnésium, calcium et potassium.

Selon une mise en œuvre préférée de l'invention, une composition pesticide ou répulsive prête à l'emploi comprend 0,5-5% en masse d'un principe actif de l'invention, 10-98% en masse de fructose, et éventuellement le complément en eau, de préférence eau de mer, ou le complément en eau et éthanol.

L'invention concerne aussi toute utilisation non thérapeutique d'une combinaison d'un composé terpénique insaturé choisi parmi le géraniol et le citronellal ou d'un mélange de géraniol et de citronellal, d'au moins un tensioactif anionique et/ou non ionique et d'au moins un solvant choisi parmi un composé de la formule (I) semi-développée CH₃OC₃H₆OC₃H₆OH, le lactate d'éthyle et un mélange d'undit composé (I) et du lactate d'éthyle, comme principe actif pesticide ou répulsif. Selon l'invention, cette utilisation s'étend à toute composition comprenant un principe actif précité et un diluant tel que décrit ci-dessus, et optionnellement tout additif approprié, et de préférence après dilution dans un solvant aqueux, alcoolique ou hydroalcoolique.

La présente invention est maintenant illustrée par les exemples suivants mettant en lumière, grâce à des essais comparatifs, les avantages de l'invention, et en particulier ses performances insecticides.

La préparation des compositions testées et les tests insecticides auxquels elles sont soumises sont décrits ci-après.

Le géraniol et le citronellal utilisés sont commercialisés, ils sont d'origine synthétique.

Les tensioactifs anioniques illustrés ci-dessous sont :
le sulfonate de paraffine (désigné par SAS) utilisé est identifié sous le no CAS 97489-15-1, il s'agit d'un sulfonate d'alcanes (C14-C17) secondaires et de sodium,
le lauryl sulfate de sodium (SLS),
le lauryl ether sulfate de sodium (SLES),
le lauryl sarcosinate de sodium (sarkosyl), et
le stéarate de sodium.

Les tensioactifs non ioniques illustrés ci-dessous sont :
le deceth 8 et
le polyéthylène glycol triméthylnonylether (TMN) (tel que commercialisé sous le nom TERGITOL^{®} 15S7).

Les pourcentages de tensioactifs mentionnés dans le tableau 1 ci-dessous s'entendent à 100% (m/m) d'extrait sec.

L'éther monométhylique du propylène glycol (désigné DPM) testé selon l'invention est disponible dans le commerce.

Les différentes combinaisons à base de géraniol ou citronellal testées sont préparées par simple mélange à température ambiante des constituants, certaines sont complétées par de l'huile essentielle de menthe poivrée et chaque combinaison résultante est diluée dans de l'eau et de l'éthanol afin d'obtenir une composition de principe actif. A titre de contrôle, des compositions aqueuses de géraniol, de géraniol et d'huile essentielle (HE) de menthe poivrée, de citronellal, et de citronellal et d'huile essentielle (HE) de menthe poivrée, sont testées.

Les compositions de l'invention ainsi préparées sont présentées dans le tableau 1 suivant, qui indique le pourcentage en masse de chaque constituant par rapport à la masse de la composition finale.

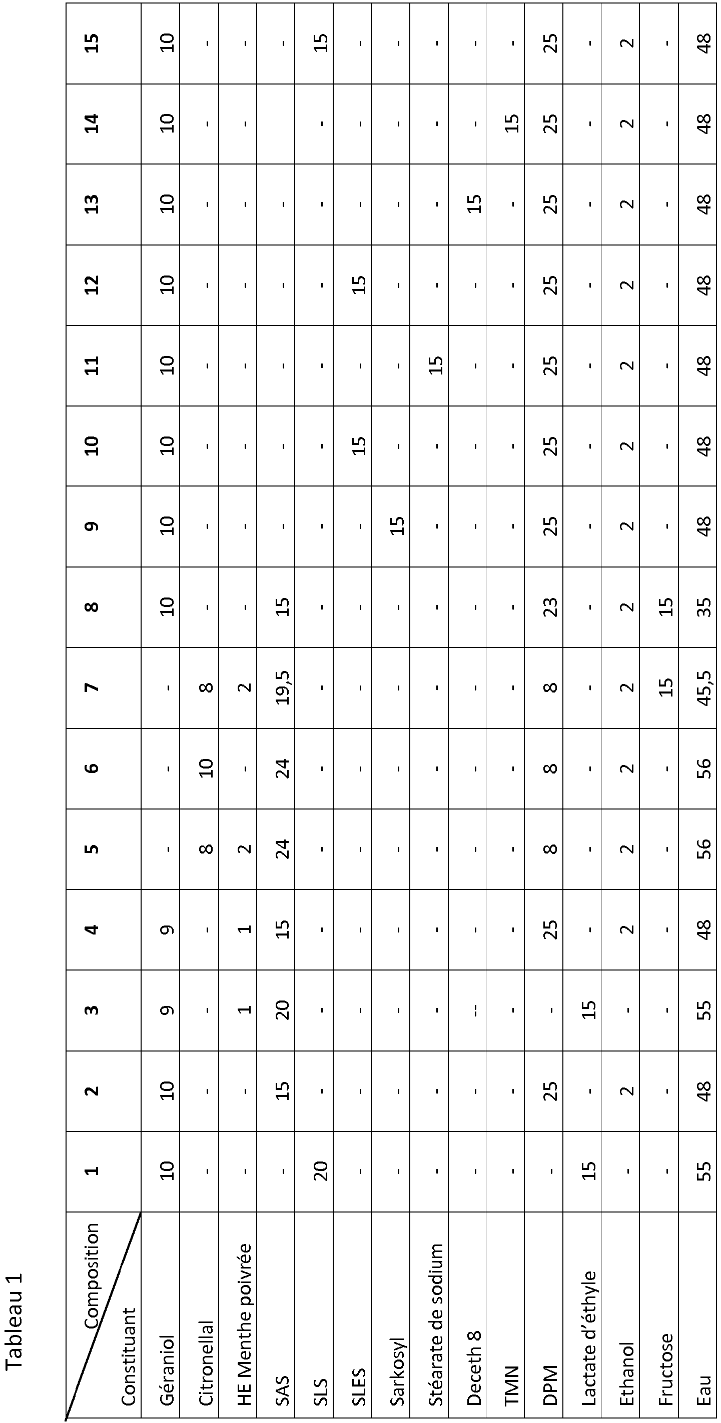

Les compositions du tableau 1 sont diluées dans l'eau à des concentrations variant de 0,5% à 30% en masse avant évaluation, pour obtenir chacune d'elles selon la cible, une concentration en poids de géraniol ou de citronellal (%G/C) telle que déterminé dans le tableau 2 ci-dessous.

L'efficacité insecticide des compositions ainsi obtenues vis-à-vis de tous les insectes ou efficacité multi-insecte, est évaluée sur les cibles suivantes :
- la blatte germanique (Blattella germanica) en tant que représentant des insectes rampants, notamment fourmis, puces, tiques, perce-oreilles, poux,
- le moustique (de l'espèce Aedes Aegypti, responsable de la dengue notamment) en tant que représentant des insectes volants,
- la punaise de lit (de l'espèce Cimex Lectularius, parasite de l'homme et particulièrement répandue),
- la mite (Tineola bisselliella), connue sous le nom de mite des vêtements, appartenant à la famille des Tineidae,
- la fourmi (Lasius niger), la fourmi noire des jardins qui est une espèce de fourmi cosmopolite de la sous-famille des Formicinae,
- la blatte orientale, Blatta orientalis, qui est une espèce de cafard cosmopolite et la seconde espèce la plus rencontrée dans les habitations,
- la mouche, Musca domestica, l'espèce la plus commune des mouches, et
- la tique, *Ixodes Ricinus,* en augmentation depuis quelques décennies dans de nombreuses régions de l'hémisphère nord, elle joue un rôle écoépidémiologique important voire majeur dans la transmission de certaines maladies (maladie de Lyme par exemple).

Le test suivi est une adaptation de la norme ASTM E 654-96 relative aux aérosols contre les blattes. Il est basé sur le document Technical Notes for Guidance on Product Evaluation, Product Type 18 and Product Type 19 (CA Décembre 2012).

Les insectes sont déposés sur un papier filtre d'un diamètre de 14 cm et disposé dans un cylindre en verre. Un tir direct de 2 g de chaque composition contenue dans un pulvérisateur jetable de laboratoire est effectué sur les insectes, à une distance de 30 cm. Un test contrôle pour lequel les insectes ne sont pas traités est réalisé en parallèle.

Un insecte est considéré comme mort dès lors qu'il ne bouge pas normalement.

Le résultat de l'évaluation insecticide vis-à-vis des blattes germaniques et des punaises de lit est exprimé par la plus courte des durées choisies parmi les valeurs suivantes : 5 min, 15 min, 30 min, 1h, 2h, 24h, 48h et 72h pour laquelle un taux de mortalité des insectes de 100% est observé. Les résultats sont qualifiés de mauvais dès lors qu'un taux de mortalité de 100% n'est pas obtenu dans les 72h.

Les résultats de l'évaluation insecticide vis-à-vis des moustiques, des mites et des fourmis sont qualifiés de mauvais dès lors qu'un taux de mortalité de 100% n'est pas obtenu dans les 5 minutes.

Les propriétés multi-insecte d'une composition sont confirmées quand elle présente une efficacité à la fois vis-à-vis de la blatte germanique, du moustique de la punaise de lit.

Les résultats de ces tests sur les blattes germaniques, les moustiques, les mites, les punaises de lit et les fourmis sont présentés dans le tableau 2 ci-dessous et les résultats de ces tests sur les blattes orientales, les mouches et les tiques sont présentés dans le tableau 3 ci-dessous. Les compositions de l'invention testées comprennent un principe actif de l'invention à base de géraniol ou de citronellal, un tensioactif anionique ou un tensioactif non ionique, et un solvant choisi parmi le dipropylène glycol méthyl éther (DPM) ou le lactate d'éthyle (LE) et éventuellement des additifs comme l'huile essentielle de menthe poivrée (MP) et le fructose et un diluant choisi parmi l'eau, l'éthanol et un mélange d'eau et d'éthanol.

La première colonne des tableaux 2 et 3 mentionne la formulation de la composition hors invention ou la référence de la composition selon l'invention mentionnée dans le tableau 1, et les autres colonnes indiquent le temps nécessaire pour une composition en une teneur exprimée en pourcentage en masse par rapport à la composition, ou un contrôle, pour tuer 100% des insectes.

**Tableau 2**

| Composition | Cible | | | | | | | | | |
|---|---|---|---|---|---|---|---|---|---|---|
| | %G/C | Blattes germaniques | %G/C | Moustiques | %GC | Mites | %G/C | Punaises de lit | %G/C | Fourmis |
| Géraniol | 2 | 24 heures | 0,5 | 5 min | 0,5 | 5min | 2 | 24h | 2 | 24h |
| Citronellal | 2 | >7jours | 0,5 | 5 min | 0,5 | 5 min | 2 | >7jours | 2 | >7jours |
| Géraniol 90% + MP 10% | 2* | 24h | 0,5 | 5 min | 0,5 | 5 min | 2 | 24h | 2 | 24h |
| Citronellal 80% + MP 20% | 2** | >7jours | 0,5 | 5 min | 0,5 | 5 min | 2 | 24h | 2 | >7jours |
| 1 | | | 0,5 | 5 min | 0,5 | 5 min | 2 | 2h | 2 | 2h |
| 2 | 2 | 5 min | 0,5 | 5 min | 0,5 | 5 min | 2 | 5 min | 2 | 5 min |
| 3 | | | 0,5 | 5 min | 0,5 | 5 min | 2 | 4h | 2 | 2h |
| 4 | 2 | 30 min | 0,5 | 5 min | 0,5 | 5 min | 2 | 15min | 2 | 5 min |
| 5 | 2 | 5 min | 0,5 | 5 min | 0,5 | 5 min | 2 | 5 min | 2 | 5 min |
| 6 | 2 | 30 min | 0,5 | 5 min | 0,5 | 5 min | 2 | 5 min | 2 | 5 min |
| 9 | 2 | 2h | | NT | | NT | | NT | | NT |
| 10 | 2 | 4h | | NT | | NT | | NT | | NT |
| 11 | 2 | 2h | | NT | | NT | | NT | | NT |
| 12 | 2 | 30 min | | NT | | NT | | NT | | NT |
| 13 | 2 | 4h | | NT | | NT | | NT | | NT |
| 14 | 2 | 4h | | NT | | NT | | NT | | NT |
| 15 | 2 | 4h | | NT | | NT | | NT | | NT |

| | | | | | | | | | | |
|---|---|---|---|---|---|---|---|---|---|---|
| * %G+MP ** %C+MP NT non testé | | | | | | | | | | |

Toutes les compositions de l'invention affichent un pouvoir insecticide très supérieur à celui du géraniol ou du citronellal vis-à-vis de cibles très difficiles à éradiquer comme les blattes germaniques ou les punaises de lit. Les formules les plus efficaces sont les compositions 2, 4, 5, 6 et 12 de l'invention, dont le pouvoir insecticide vis-à-vis des blattes germaniques et des punaises de lit (sauf pour la composition 12 non testée) est fortement augmenté par rapport à des compositions de l'art antérieur. On note de plus une fulgurance d'efficacité nettement améliorée par rapport au géraniol ou citronellal seul.

**Tableau 3**

| Composition | Cible | | | | | |
|---|---|---|---|---|---|---|
| | %G/C | Blattes orientales | %G/C | Mouches | %G/C | Tiques |
| Géraniol | 2 | 7 jours | | NT | | NT |
| Citronellal | 3 | >7 jours | | NT | | NT |
| Citronellal 80% + MP 20% | 2* | >7 jours | | NT | | NT |
| 2 | 2 | 5 min | 1 | 5 min | 2 | 15 min |
| 4 | 3 | 48h | 3 | 5 min | | NT |
| 5 | 2 | 1h | 2 | 5 min | | NT |
| 6 | 3 | 48h | 3 | 5 min | | NT |
| 7 | 2 | 2h | 0,5 | 5 min | | NT |
| 8 | 2 | 2h | 0,5 | 5 min | | NT |

| | | | | | | |
|---|---|---|---|---|---|---|
| *%C+MP NT non testé | | | | | | |

Il ressort du tableau 3 que les compositions selon l'invention confirment leur efficacité, et notamment la formule 2 qui présente une efficacité exceptionnelle vis-à-vis de la blatte orientale avec un résultat de 100% de mortalité des insectes à seulement 5 minutes. Ces résultats élargissent par ailleurs de façon évidente les spectres d'activité sur d'autres types d'insectes.

Ces résultats démontrent explicitement les performances des objets de l'invention.

## Revendications

1. Principe actif pesticide ou répulsif consistant en une combinaison d'un composé terpénique insaturé choisi parmi le géraniol, le citronellal et un mélange de géraniol et de citronellal, d'au moins un tensioactif anionique et/ou un tensioactif non ionique, et d'un solvant choisi parmi un composé de la formule (I) semi-développée CH₃OC₃H₆OC₃H₆OH, le lactate d'éthyle et un mélange d'undit composé (I) et du lactate d'éthyle.

2. Principe actif pesticide ou répulsif selon la revendication 1, **caractérisé en ce que** le tensioactif anionique est choisi parmi un sulfonate d'alcane secondaire et un lauryl sulfate, ainsi que leurs mélanges.

3. Principe actif pesticide ou répulsif selon la revendication 1 ou 2, **caractérisé en ce que** ledit composé (I) est le dipropylène glycol méthyl éther de formule CH_{3O}[CH₂CH(CH₃)O]₂H.

4. Principe actif pesticide ou répulsif selon l'une quelconque des revendications 1 à 3, **caractérisé en ce qu'**il consiste en 0,5-30% en masse du ou des composés terpéniques, 5-60% en masse du ou des tensioactifs anioniques et/ou non ioniques et 10-94,5% en masse du ou des solvants.

5. Composition pesticide ou répulsive **caractérisée en ce qu'**elle comprend un principe actif selon l'une quelconque des revendications 1 à 4, un diluant et/ou des additifs.

6. Composition pesticide ou répulsive selon la revendication 5, **caractérisée en ce qu'**elle comprend 0,5-90% en masse dudit principe actif.

7. Composition pesticide ou répulsive selon la revendication 5 ou 6, **caractérisée en ce qu'**elle comprend au moins un additif choisi parmi une huile essentielle de menthe poivrée, un sucre et des sels.

8. Composition pesticide ou répulsive selon la revendication 7, **caractérisée en ce que** le sucre est choisi parmi le glucose et le fructose.

9. Composition pesticide ou répulsive selon l'une quelconque des revendications 5 à 8, **caractérisée en ce que** les sels sont choisis parmi des chlorures et des sulfates de sodium, de magnésium, de calcium et de potassium.

10. Composition pesticide ou répulsive selon l'une quelconque des revendications 5 à 9, **caractérisée en ce que** le diluant est de l'eau de mer et **en ce que** les sels sont au moins en partie, apportés par l'eau de mer.

11. Composition pesticide ou répulsive selon l'une quelconque des revendications 5 à 10, **caractérisée en ce qu'**elle comprend 0,5-5% en masse dudit principe actif, 10-98% en masse de fructose, et éventuellement le complément en eau, de préférence eau de mer, ou le complément en eau et éthanol.

12. Utilisation non-thérapeutique d'une combinaison d'un composé terpénique insaturé choisi parmi le géraniol et le citronellal ou d'un mélange de géraniol et de citronellal, d'au moins un tensioactif anionique et/ou un tensioactif non ionique et d'au moins un solvant choisi parmi un composé de la formule (I) semi-développée CH₃OC₃H₆OC₃H₆OH, le lactate d'éthyle et un mélange d'undit composé (I) et du lactate d'éthyle, comme principe actif pesticide ou répulsif.

13. Utilisation non-thérapeutique selon la revendication 12, **caractérisé en ce que** le principe actif est dilué dans de l'eau, un alcool ou un mélange hydroalcoolique.

## Patentansprüche

1. Pestizid- oder abweisender Wirkstoff, bestehend aus einer Kombination aus einer ungesättigten Terpenverbindung, ausgewählt aus Geraniol, Citronellal und einem Gemisch aus Geraniol und Citronellal, mindestens einem anionischen Tensid und/oder einem nichtionischen Tensid, und einem Lösungsmittel, ausgewählt aus einer Verbindung der halbenwickelten Formel (I) CH₃OC₃HeOC₃H₆OH, Ethyllaktat und einem Gemisch aus einer Verbindung (I) und Ethyllaktat.

2. Pestizid- oder abweisender Wirkstoff nach Anspruch 1, **dadurch gekennzeichnet, dass** das anionische Tensid aus einem sekundären Alkansulfonat und einem Laurylsulfat sowie deren Gemischen ausgewählt ist.

3. Pestizid- oder abweisender Wirkstoff nach Anspruch 1 oder 2, **dadurch gekennzeichnet, dass** die Verbindung (I) Dipropylenglykolmethylether der Formel CH₃O[CH₂CH(CH₃)O]₂H ist.

4. Pestizid- oder abweisender Wirkstoff nach einem der Ansprüche 1 bis 3, **dadurch gekennzeichnet, dass** er aus 0,5-30 Massenprozent der Terpenverbindung(en), 5-60 Massenprozent der anionischen und/oder nichtionischen Tenside und 10-94,5 Massenprozent des oder der Lösungsmittel besteht.

5. Pestizid- oder abweisende Zusammensetzung, **dadurch gekennzeichnet, dass** sie einen Wirkstoff nach einem der Ansprüche 1 bis 4, ein Verdünnungsmittel und/oder Zusätze umfasst.

6. Pestizid- oder abweisende Zusammensetzung nach Anspruch 5, **dadurch gekennzeichnet, dass** sie 0,5-90 Massenprozent des Wirkstoffs umfasst.

7. Pestizid- oder abweisende Zusammensetzung nach Anspruch 5 oder 6, **dadurch gekennzeichnet, dass** sie mindestens einen Zusatz umfasst, der aus einem ätherischen Pfefferminzöl, einem Zucker und Salzen ausgewählt ist.

8. Pestizid- oder abweisende Zusammensetzung nach Anspruch 7, **dadurch gekennzeichnet, dass** der Zucker aus Glukose und Fruktose ausgewählt ist.

9. Pestizid- oder abweisende Zusammensetzung nach einem der Ansprüche 5 bis 8, **dadurch gekennzeichnet, dass** die Salze aus Chloriden und Sulfaten von Natrium, Magnesium, Kalzium und Kalium ausgewählt sind.

10. Pestizid- oder abweisende Zusammensetzung nach einem der Ansprüche 5 bis 9, **dadurch gekennzeichnet, dass** das Verdünnungsmittel Meerwasser ist und dass die Salze zumindest teilweise durch Meerwasser zugeführt werden.

11. Pestizid- oder abweisende Zusammensetzung nach einem der Ansprüche 5 bis 10, **dadurch gekennzeichnet, dass** sie 0,5-5 Massenprozent des Wirkstoffs, 10-98 Massenprozent Fruktose und gegebenenfalls die Ergänzung als Wasser, vorzugsweise Meerwasser, oder die Ergänzung als Wasser und Ethanol umfasst.

12. Nichttherapeutische Verwendung einer Kombination aus einer ungesättigten Terpenverbindung, ausgewählt aus Geraniol und Citronellal oder einem Gemisch aus Geraniol und Citronellal, mindestens einem anionischen Tensid und/oder einem nichtionischen Tensid und mindestens einem Lösungsmittel, ausgewählt aus einer Verbindung der halbentwickelten Formel (I) CH₃OC₃H₆OC₃H₆OH, Ethyllaktat und einem Gemisch aus einer Verbindung (I) und Ethyllaktat, als Pestizid- oder abweisender Wirkstoff.

13. Nichttherapeutische Verwendung nach Anspruch 12, **dadurch gekennzeichnet, dass** der Wirkstoff in Wasser, einem Alkohol oder einem hydroalkoholischen Gemisch verdünnt wird.

## Claims

1. A pesticidal or repellent active ingredient consisting of a combination of an unsaturated terpene compound selected from among geraniol, citronellal and a mixture of geraniol and citronellal, at least one anionic surfactant and/or one nonionic surfactant, and a solvent selected from among a compound of semi-structural formula (I) CH₃OC₃H₆OC₃H₆OH, ethyl lactate and a mixture of said compound (I) and ethyl lactate.

2. The pesticidal or repellent active ingredient according to claim 1, **characterized in that** the anionic surfactant is selected from among a secondary alkane sulfonate and a lauryl sulfate, as well as mixtures thereof.

3. The pesticidal or repellent active ingredient according to claim 1 or 2, **characterized in that** said compound (I) is dipropylene glycol methyl ether of formula CH₃O[CH₂CH(CH₃)O]₂H.

4. The pesticidal or repellent active ingredient according to any one of claims 1 to 3, **characterized in that** it consists of 0.5-30 weight% of the terpene compound(s), 5-60 weight% of the anionic and/or nonionic surfactant(s) and 10-94.5 weight% of the solvent(s).

5. A pesticidal or repellent composition **characterized in that** it comprises an active ingredient according to any one of claims 1 to 4, a diluent and/or additives.

6. The pesticidal or repellent composition according to claim 5, **characterized in that** it comprises 0.5-90 weight% of said active ingredient.

7. The pesticidal or repellent composition according to claim 5 or 6, **characterized in that** it comprises at least one additive selected from among a peppermint essential oil, a sugar and salts.

8. The pesticidal or repellent composition according to claim 7, **characterized in that** the sugar is selected from among glucose and fructose.

9. The pesticidal or repellent composition according to any one of claims 5 to 8, **characterized in that** the salts are selected from among chlorides and sulfates of sodium, magnesium, calcium and potassium.

10. The pesticidal or repellent composition according to any one of claims 5 to 9, **characterized in that** the diluent is seawater and **in that** the salts are, at least in part, supplied by the seawater.

11. The pesticidal or repellent composition according to any one of claims 5 to 10, **characterized in that** it comprises 0.5-5 weight% of said active ingredient, 10-98 weight% of fructose, and possibly the balance being water, preferably sea water, or the balance being water and ethanol.

12. A non-therapeutic use of a combination of an unsaturated terpene compound selected from among geraniol and citronellal or a mixture of geraniol and citronellal, at least one anionic surfactant and/or one nonionic surfactant, and at least one solvent selected from among a compound of semi-structural formula (I) CH₃OC₃H₆OC₃H₆OH, ethyl lactate and a mixture of said compound (I) and ethyl lactate, as a pesticidal or repellent active ingredient.

13. The non-therapeutic use according to claim 12, **characterized in that** the active ingredient is diluted in water, an alcohol or a hydroalcoholic mixture.
